# EUROPEAN PATENT APPLICATION

(11) **EP 4 398 588 A1**
(43) Date of publication of application: **10.07.2024**
(21) Application number: 21960483.2
(22) Date of filing: 17.12.2021
(51) Int. Cl.: H04N 21/466

(54) **VIDEO PUSHING METHOD, DEVICE, AND STORAGE MEDIUM**

(30) Priority: 11.10.2021 CN 202111184229
(71) Applicant: Shenzhen Skyworth-RGB Electronic Co., Ltd., Shenzhen, Guangdong 518057 (CN)
(72) Inventor: SUN, Sikai, Shenzhen, Guangdong 518057 (CN)
(74) Representative: Osterhoff, Utz
(86) International application number: PCT/CN2021/139233
(87) International publication number: WO 2023/060759

(57) **Abstract**

The present application relates to the technical field of multimedia, and provides a video pushing method, a video pushing device and a storage medium. The video pushing method includes obtaining audio-video information of a multimedia file played on a display interface; performing scene recognition on the audio-video information through a preset scene recognition model to obtain a scene recognition result; and determining a video pushing category according to the scene recognition result, and pushing a video according to the video pushing category.

## Description

### CROSS-REFERENCE TO RELATED APPLICATIONS

The present application claims priority to Chinese Patent Application No. 202111184229.1, filed on October 11, 2021, the entire contents of which are incorporated herein by reference.

### TECHNICAL FIELD

The present application relates to the technical field of multimedia, and in particular to a video pushing method, a video pushing device and a storage medium.

### BACKGROUND

At present, short video playback software is very popular among users, but users only have fragmented time to use the short video playback software. When a user enters the video display interface, the currently pushed short video is pushed randomly from the backend of the short video platform. Because most of the videos currently pushed are submitted blindly, the short videos delivered are not consistent with the content and products that users are interested in, resulting in the delivery effect does not meet expectations, which even causes complaints from users.

The above content is only used to assist in understanding the technical solutions of the present application, and does not represent an admission that the above content is prior art.

### SUMMARY

The main purpose of the present application is to provide a video pushing method, a video pushing device and a storage medium, aiming to solve the technical problem in the prior art that the video content pushed to the user is random and cannot meet the user's viewing needs.

In order to achieve the above objective, the present application provides a video pushing method, including:
obtaining audio-video information of a multimedia file played on a display interface;
performing scene recognition on the audio-video information through a preset scene recognition model to obtain a scene recognition result; and
determining a video pushing category according to the scene recognition result, and pushing a video according to the video pushing category.

In an embodiment, the audio-video information includes image information and/or audio information,
the obtaining the audio-video information of the multimedia file played on the display interface includes:
intercepting the image information of the multimedia file played on the display interface at a preset interception frequency during a preset sampling period; and/or
recording the audio information of the multimedia file played on the display interface at a preset recording frequency and with a recording duration during a preset sampling period.

In an embodiment, the scene recognition result includes an image recognition result and/or an audio recognition result;
the performing scene recognition on the audio-video information through the preset scene recognition model to obtain the scene recognition result includes:
extracting an image feature in each intercepted image information through the preset scene recognition model, and performing scene recognition on the image feature extracted to obtain the image scene recognition result; and/or
extracting a voiceprint feature in the audio information through the preset scene recognition model, and performing scene recognition on the voiceprint feature extracted to obtain the audio scene recognition result.

In an embodiment, after the extracting the image feature in each intercepted image information through the preset scene recognition model, and performing scene recognition on the image feature extracted to obtain the image scene recognition result, the method further includes:
determining an image scene category corresponding to each image information according to the image scene recognition result;
counting a video category number according to the image scene category;
determining whether the video category number is less than a preset number;
in response to that the video category number is less than the preset number, adjusting the preset sampling period; and
intercepting the image information of the multimedia file played on the display interface at a preset interception frequency during an adjusted sampling period.

In an embodiment, before the determining the video pushing category according to the scene recognition result, and pushing the video according to the video pushing category, the method further includes:
obtaining a historical scene recognition result of the multimedia file;
determining whether the historical scene recognition result is consistent with the scene recognition result; and
in response to that the historical scene recognition result is consistent with the scene recognition result, counting the number of times that the historical scene recognition result is consistent with the scene recognition result, and in response to that the number of times reaches a preset times threshold, determining the video pushing category according to the scene recognition result, and pushing the video according to the video pushing category.

In an embodiment, the determining the video pushing category according to the scene recognition result, and pushing the video according to the video pushing category includes:
determining a video category of the multimedia file and a playback duration corresponding to the video category according to the scene recognition result;
determining a playback weight corresponding to the video category according to the playback duration; and
determining the video pushing category according to the playback weight, and pushing the video according to the video pushing category.

In an embodiment, before the obtaining the audio-video information of the multimedia file played on the display interface, the method further includes:
obtaining a historical video pushing category; and
determining a current video to be pushed according to the historical video pushing category, and displaying the video to be pushed.

In addition, in order to achieve the above objective, the present application further provides a video pushing apparatus, including:
an obtain module, configured to obtain audio-video information of a multimedia file played on a display interface;
a recognition module, configured to perform scene recognition on the audio-video information through a preset scene recognition model to obtain a scene recognition result; and
a pushing module, configured to determine a video pushing category according to the scene recognition result, and push a video according to the video pushing category.

In addition, in order to achieve the above objective, the present application further provides a video pushing device including a memory, a processor and a video pushing program stored on the memory and executed on the processor. When the video pushing program is executed by the processor, steps of the above-mentioned video pushing method are implemented.

In addition, in order to achieve the above objective, the present application further provides a storage medium. A video pushing program is stored on the storage medium, and when the video pushing program is executed by a processor, steps of the above-mentioned video pushing method are implemented.

In the present application, the video pushing method includes: obtaining audio-video information of a multimedia file played on a display interface; performing scene recognition on the audio-video information through a preset scene recognition model to obtain a scene recognition result; and determining a video pushing category according to the scene recognition result, and pushing a video according to the video pushing category. Since in the present application, scene recognition is performed on audio-video information through a preset scene recognition model, the scene recognition result is obtained; the video pushing category is determined based on the scene recognition result, and the video is pushed based on the video pushing category. Compared with the existing method of randomly displaying videos to users, the method described above in the present application can push videos that users are interested in, which will improve the user experience. Moreover, the product links for promotion in the video content will not arouse users' disgust. Instead, the method can increase the success rate of users clicking and entering the back-end mall, which can better satisfy users' usage habits and increase the success rate of promotion, thereby increasing operating income, and also reducing the user complaint rate.

### BRIEF DESCRIPTION OF THE DRAWINGS

FIG. 1 is a schematic structural view of a hardware operating environment of a video pushing device according to some embodiments of the present application.
FIG. 2 is a schematic flow chart of a video pushing method according to a first embodiment of the present application.
FIG. 3 is a schematic flow chart of the video pushing method according to a second embodiment of the present application.
FIG. 4 is a schematic structural view of the video pushing apparatus according to a first embodiment of the present application.

The implementation of the purpose, functional characteristics and advantages of the present application will be further described with reference to the attached drawings and in combination with embodiments.

### DETAILED DESCRIPTION OF THE EMBODIMENTS

It should be understood that the specific embodiments described here are only used to explain the present application and are not used to limit the present application.

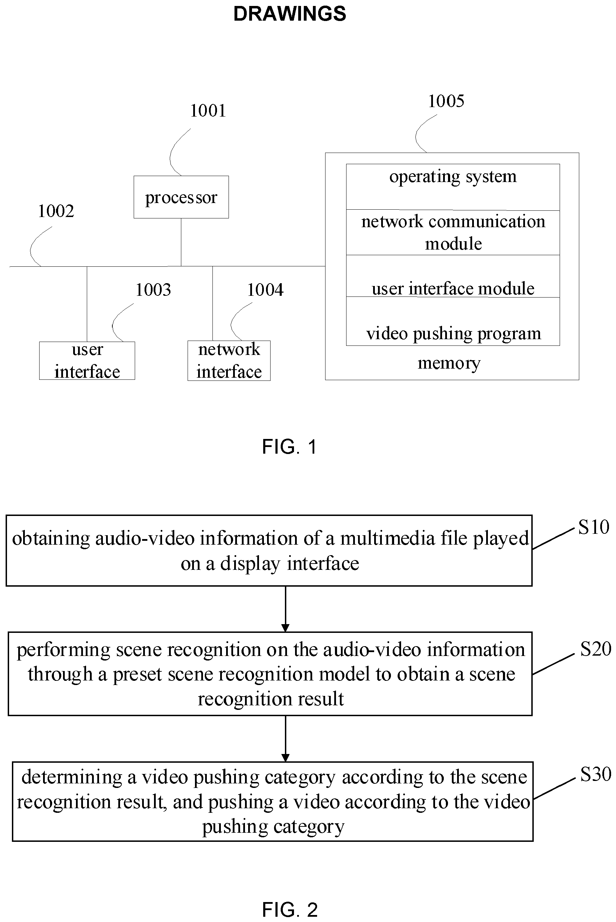

As shown in FIG. 1, FIG. 1 is a schematic structural view of a hardware operating environment of a video pushing device according to some embodiments of the present application.

As shown in FIG. 1, the video pushing device may include: a processor 1001, such as a central processing unit (CPU), a communication bus 1002, a user interface 1003, a network interface 1004, and a memory 1005. The communication bus 1002 is used to realize connection communication between these components. The user interface 1003 may include a display screen and an input unit such as a keyboard. The user interface 1003 may also include a standard wired interface and a wireless interface. The network interface 1004 may include a standard wired interface or a wireless interface (such as a wirelessfidelity (WI-FI) interface). The memory 1005 may be a high-speed random access memory (RAM) or a stable non-volatile memory (NVM), such as a disk memory. The memory 1005 may be a storage device independent of the aforementioned processor 1001.

Those skilled in the art can understand that the structure shown in FIG. 1 does not constitute a limitation on the video pushing device which may include more or fewer components than shown, or a combination of certain components, or differently arranged components.

As shown in FIG. 1, the memory 1005 as a storage medium, may include an operating system, a network communication module, a user interface module and a video pushing program.

In the video pushing device shown in FIG. 1, the network interface 1004 is mainly used for data communication with the network server; the user interface 1003 is mainly used for data interaction with the user; the processor 1001 and the memory 1005 of the video pushing device of the present application can be provided inside the video pushing device, the video pushing device calls the video pushing program stored on the memory 1005 through the processor 1001, and executes the video pushing method provided by the present application.

Based on the above video pushing device, embodiments of the present application provide a video pushing method. As shown in FIG. 2, which is a schematic flow chart of a video pushing method according to a first embodiment of the present application.

In this embodiment, the video pushing method includes:
S10, obtaining audio-video information of a multimedia file played on a display interface.

It should be noted that the execution subject in this embodiment may be a computing service device with data processing, network communication and program running functions, such as a mobile phone, a tablet computer, a personal computer, etc., and an electronic device or video playback device capable of realizing the above functions. The following takes the video playback device as an example to describe the following embodiments.

It should be noted that the display interface may be a display interface of a device such as a television or a mobile phone with a video browsing function. The multimedia file may be a video file or audio file being played by the display interface. The audio-video information may be image information and/or audio information contained in the multimedia file.

In some embodiments, the video playback device obtains the audio-video information of the multimedia file currently played on the display interface.

Furthermore, in order to avoid the inability to directly obtain the audio-video information watched by the user from the background due to lack of permissions and other issues, the step S10 includes: intercepting the image information of the multimedia file played on the display interface at a preset interception frequency during a preset sampling period; and/or recording the audio information of the multimedia file played on the display interface at a preset recording frequency and with a recording duration during a preset sampling period.

It should be noted that the preset sampling period may be a sampling period which is set in advance. A period can be 10 minutes or 30 minutes. The preset interception frequency may be a sampling interval duration which is set in advance. For example, the image information of the multimedia file played on the display interface is intercepted at 300ms/time. The preset recording frequency may be a recording interval duration which is set in advance. For example, the audio information of the multimedia file played by the display interface is recorded at 100ms/time. In some embodiments, it's no need to set the recording frequency, and the audio is continuously recorded when sound is detected. The recording duration is the time for recording audio once. If the recording frequency is not set, audio recording will continue when sound is detected, and the recording duration at this time is the preset sampling period. The above-mentioned preset sampling period, preset interception frequency and recording duration can be adaptively set according to specific usage scenarios, and are not limited in this embodiment.

Furthermore, in order to make the pushed videos more in line with user expectations and enhance user experience, before the step S10, the method further includes: obtaining a historical video pushing category; and determining a current video to be pushed according to the historical video pushing category, and displaying the video to be pushed.

It should be noted that the historical video pushing category may be the video pushing category corresponding to the scene recognition result when the user used the video playback device to watch a video last time.

It should be understood that when the user first enters the video browsing interface, the scene recognition result this time has not been completed, and the current video push needs to be carried out according to the video pushing category corresponding to the last scene recognition result. For example, when a user enters the video browsing interface, according to the video pushing category before the day, the video of such a category is filtered and pushed every time. During a week, Monday's video pushing category will be used to filter and push videos on Tuesday, and Tuesday's video pushing category will be used to filter and push videos on Wednesday. You can also set a summary cycle, that is, every other summary cycle, the comprehensive video pushing category will be summarized according to each video pushing category in the cycle, and the video will be filtered and pushed based on the comprehensive video pushing category.

S20, performing scene recognition on the audio-video information through a preset scene recognition model to obtain a scene recognition result.

It should be noted that the preset scene recognition model can be a scene recognition model trained in advance through a large amount of sample data, which can identify the current playback scene according to the input audio-video information. The scene recognition result includes an image scene recognition result and/or an audio scene recognition result.

Furthermore, in order to make the identified scenes more accurate, the step S20 further includes: extracting an image feature in each intercepted image information through the preset scene recognition model, and performing scene recognition on the image feature extracted to obtain the image scene recognition result; and/or extracting a voiceprint feature in the audio information through the preset scene recognition model, and performing scene recognition on the voiceprint feature extracted to obtain the audio scene recognition result.

It should be noted that the image feature includes texts, watermarks, logos or item information features in the image information. For example, when a user is watching a live broadcast of a basketball event, there is a typical basketball logo picture in the upper left corner of the image information obtained. There are also basketball elements in the image. Therefore, it can be determined that the current video type is basketball. The voiceprint feature may be a voiceprint in recorded audio information. For example, there will be special voiceprint information in the voiceprint fragments of piano music to support the preset scene recognition model for scene judgment.

In some embodiments, when the video playback device detects that the currently acquired information is image information, it extracts the image features in each intercepted image information through a preset scene recognition model, and performs scene recognition on the extracted image features to obtain the image scene recognition result. The video types included in the image scene recognition result may be one or more. When the video playback device detects that the currently acquired information is audio information, it extracts the voiceprint features in the audio information through a preset scene recognition model, and performs scene recognition on the extracted voiceprint features to obtain an audio scene recognition result. There may also be one or more audio types included in the audio scene recognition result. When the video playback device detects that there are both image information and audio information, scene recognition is performed on the image information and audio information respectively to obtain a target scene recognition result. The target scene recognition result includes a video scene and an audio scenes.

Furthermore, after the step of extracting the image feature in each intercepted image information through the preset scene recognition model, and performing scene recognition on the image feature extracted to obtain the image scene recognition result, the method further includes determining an image scene category corresponding to each image information according to the image scene recognition result; counting a video category number according to the image scene category; determining whether the video category number is less than a preset number; in response to that the video category number is less than the preset number, adjusting the preset sampling period; and intercepting the image information of the multimedia file played on the display interface at a preset interception frequency during an adjusted sampling period.

It should be noted that the image scene category may be an image scene category corresponding to the image information recognized by the preset scene recognition model based on the image information. The video category number may be the number of categories of videos played within the preset sampling period. The preset number may be customized.

It should be understood that in order to avoid that in some special cases, the image scene recognition result only contains videos of one category, resulting in a single category of pushed videos. When the video category number is less than the preset number, the preset sampling period is adjusted, generally by increasing the sampling period, so that the types of videos acquired during the sampling period are not less than the preset number. Correspondingly, the above processing logic also applies to the audio scene recognition result. When the number of identified audio types is less than the preset number, the sampling duration is increased so that the number of audio categories obtained during the sampling period is not less than the preset number. When the audio-video information includes image information and audio information, the number of image scene categories and the number of audio scene categories can be determined based on the audio scene recognition result and the image scene recognition result, and whether the sum of the number of image scene categories and the number of audio scene categories is greater than the required number can be determined.

S30, determining a video pushing category according to the scene recognition result, and pushing the video according to the video pushing category.

It should be noted that determining the video pushing category based on the scene recognition result may include: determining the category of the video viewed by the user based on the scene recognition result, and using the category of the video viewed by the user as the video pushing category. Pushing the video according to the video pushing category may include: filtering out videos belonging to the video pushing category from a large amount of videos and pushing the videos.

Furthermore, in order to make the pushed videos more in line with user expectations and enhance user experience, the step S30 includes: determining a video category of the multimedia file and a playback duration corresponding to the video category according to the scene recognition result; determining a playback weight corresponding to the video category according to the playback duration; and determining the video pushing category according to the playback weight, and pushing the video according to the video pushing category.

It should be noted that the playback weight corresponding to the video category can be determined according to the playback duration corresponding to the video category. For example, the sampling period is 30 minutes, in which the playback duration of basketball live broadcast is 10 minutes, the playback duration of news is 8 minutes, the playback duration of the entertainment is 2 minutes, the playback duration of the life is 3 minutes, and the playback duration of the piano music is 7 minutes. Then the playback weights corresponding to the video categories are 10 for basketball games, 8 for news, 2 for entertainment, 3 for life, and 7 for piano music. According to the ranking of playback weights, the recommended categories that users prefer are, from large to small, basketball games, news, piano music, life and entertainment. The video pushing category is determined based on the weight, that is, the video pushing category is determined based on the playback duration. The top three types of playback can be determined as the video push type, that is, audio and video of basketball games, news, and piano music are played. It is also possible to select more video categories for push based on the user's usage time. When a video category with a greater weight is pushed, the number of corresponding pushed videos is also greater. For example, the current video pushing category is basketball events and news, the weight of basketball events is 10, and the weight of news is 7. If the number of pushed videos is 20, it can be 11 for basketball events and 3 for news, that is, the number of videos pushed is related to the weight of this video type.

In this embodiment, the method includes: performing scene recognition on the audio-video information through a preset scene recognition model to obtain a scene recognition result; and determining a video pushing category according to the scene recognition result, and pushing the video according to the video pushing category. Since in this embodiment, scene recognition is performed on audio-video information through a preset scene recognition model to obtain the scene recognition result; the video pushing category is determined according to the scene recognition result, and the video push is performed according to the video pushing category. Compared with the existing method of randomly displaying videos to users, the method described above in the present application can push videos that users are interested in and improve the user experience. Moreover, the product links for promotion in the video content will not arouse users' disgust. Instead, the method can increase the success rate of users clicking and entering the back-end mall, which can better satisfy users' usage habits and increase the success rate of promotion, thereby increasing operating income, and also reducing the user complaint rate.

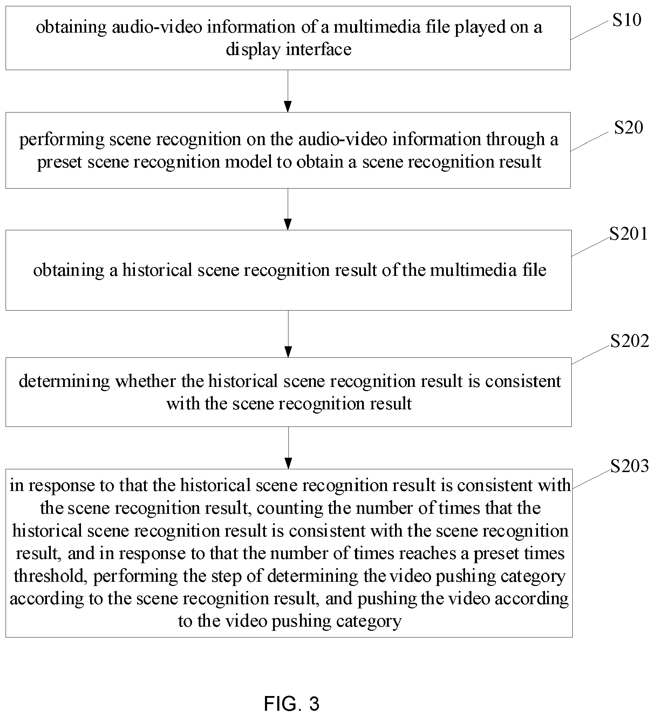

As shown in FIG. 3, FIG. 3 is a schematic flow chart of the video pushing method according to a second embodiment of the present application.

Based on the first embodiments, in this embodiment, before the step S30, the method further includes:
S201, obtaining a historical scene recognition result of the multimedia file.

It should be noted that the historical scene recognition result may be the scene recognition result of the multimedia file recognized by a previously preset scene recognition model. After obtaining the audio-video information of the multimedia file, it is necessary to perform multiple scene recognition on the audio-video information through the preset scene recognition model.

In some embodiments, the video playback device performs multiple scene recognition on the audio-video information through the preset scene recognition model. The number of recognitions can be customized to avoid errors in a single recognition. The historical scene recognition result are obtained before pushing the video.

S202, determining whether the historical scene recognition result is consistent with the scene recognition result.

It should be understood that in order to avoid misjudgment of the model in the scene recognition result, the historical scene recognition results is compared with the scene recognition result to determine whether the historical scene recognition result is consistent with the scene recognition result.

S203, in response to that the historical scene recognition result is consistent with the scene recognition result, counting the number of times that the historical scene recognition result is consistent with the scene recognition result, and in response to that the number of times reaches a preset times threshold, performing the step of determining the video pushing category according to the scene recognition result, and pushing the video according to the video pushing category.

It should be noted that the preset times threshold may be a preset number of times. Only if the historical scene recognition result is consecutively consistent with the scene recognition result, it is determined that the model has not misjudged, and then the video pushing category is determined based on the scene recognition result, and the video push is performed according to the video pushing category. For example, after obtaining the audio-video information of a multimedia file, scene recognition of the audio-video information is performed three times through a preset scene recognition model. The preset times threshold is 2 times. The scene recognition result is a news weight of 20 and a basketball event weight of 10. If the historical scene recognition result is that the first recognition result is news weight 20 and basketball game weight 10; the second recognition result is news weight 20 and basketball game weight 10. Then it can be determined that the number of times that the historical scene recognition result is consistent with the scene recognition result is 2 times, and the preset times threshold is 2 times, then the video pushing category can be determined based on the scene recognition result. If the first recognition result in the historical scene recognition results is news weight 10 and basketball event weight 20. Then the number of times that the historical scene recognition result is consistent with the scene recognition result is 1, which is less than the preset times threshold, then scene recognition is performed again. When the scene recognition result is news weight 20 and basketball game weight 10, the video pushing category is determined based on the scene recognition result. If the second recognition result in the historical scene recognition result is news weight 10 and basketball event weight 20. Then the number of times that that the historical scene recognition result is consistent with the scene recognition result is 0 times. Because the judgment condition is that there are 2 consecutive times that the historical scene recognition result is consistent with the scene recognition result. At this time, at least two more recognitions are required. When the two recognition results are consistent with the historical scene recognition result, the video pushing category are determined according to the scene recognition result.

In this embodiment, the method includes obtaining a historical scene recognition result of the multimedia file; determining whether the historical scene recognition result is consistent with the scene recognition result; in response to that the historical scene recognition result is consistent with the scene recognition result, counting the number of times that the historical scene recognition result is consistent with the scene recognition result, and in response to that the number of times reaches a preset times threshold, performing the step of determining the video pushing category according to the scene recognition result, and pushing the video according to the video pushing category. The audio-video information is recognized for multiple times and it determines whether the historical scene recognition result is consistent with the scene recognition results for multiple times; when the number of times the historical scene recognition results is consistent with the scene recognition result reaches the preset times threshold, the video pushing category is determined based on the scene recognition result, and video push is performed according to the video pushing category. It can reduce model misjudgments and make the pushed videos more in line with user expectations.

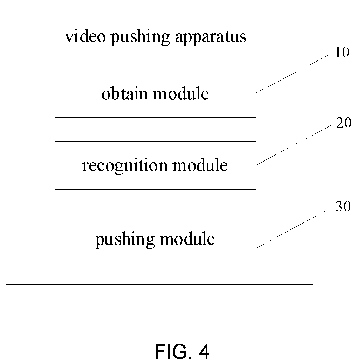

As shown in FIG. 4, FIG. 4 is a schematic structural view of a video pushing apparatus according to a first embodiment of the present application.

As shown in FIG. 4, the video pushing apparatus includes:
an obtain module 10, configured to obtain audio-video information of a multimedia file played on a display interface;
a recognition module 20, configured to perform scene recognition on the audio-video information through a preset scene recognition model to obtain a scene recognition result; and
a pushing module 30, configured to determine a video pushing category according to the scene recognition result, and push a video according to the video pushing category.

In this embodiment, the method includes: performing scene recognition on the audio-video information through a preset scene recognition model to obtain a scene recognition result; and determining a video pushing category according to the scene recognition result, and pushing the video according to the video pushing category. Since in this embodiment, scene recognition is performed on audio-video information through a preset scene recognition model to obtain the scene recognition result; the video pushing category is determined according to the scene recognition result, and the video push is performed according to the video pushing category. Compared with the existing method of randomly displaying videos to users, the method described above in the present application can push videos that users are interested in, which will improve the user experience.

It should be noted that the workflow described above is only illustrative and does not limit the scope of protection of the present application. In practical applications, those skilled in the art can select part or all of it for implementation according to actual needs. The purpose of these embodiments is not limited here.

In addition, for technical details that are not described in detail in this embodiment, please refer to the parameter operation method provided in any embodiment of the present application, and will not be described again here.

In this embodiment, the obtain module 10 is configured to intercept the image information of the multimedia file played on the display interface at a preset interception frequency during a preset sampling period; and/or record the audio information of the multimedia file played on the display interface at a preset recording frequency and with a recording duration during a preset sampling period.

Furthermore, the obtain module 10 is configured to extract an image feature in each intercepted image information through the preset scene recognition model, and perform scene recognition on the image feature extracted to obtain the image scene recognition result; and/or extract a voiceprint feature in the audio information through the preset scene recognition model, and perform scene recognition on the voiceprint feature extracted to obtain the audio scene recognition result.

Furthermore, the obtain module 10 is configured to determine an image scene category corresponding to each image information according to the image scene recognition result; count a video category number according to the image scene category; determine whether the video category number is less than a preset number; in response to that the video category number is less than the preset number, adjust the preset sampling period; and intercept the image information of the multimedia file played on the display interface at a preset interception frequency during an adjusted sampling period.

Furthermore, the pushing module 30 is configured to obtain a historical scene recognition result of the multimedia file; determine whether the historical scene recognition result is consistent with the scene recognition result; and in response to that the historical scene recognition result is consistent with the scene recognition result, count the number of times that the historical scene recognition result is consistent with the scene recognition result, and in response to that the number of times reaches a preset times threshold, perform the step of determining the video pushing category according to the scene recognition result, and pushing the video according to the video pushing category.

Furthermore, the pushing module 30 is configured to determine a video category of the multimedia file and a playback duration corresponding to the video category according to the scene recognition result; determine a playback weight corresponding to the video category according to the playback duration; and determine the video pushing category according to the playback weight, and pushing the video according to the video pushing category.

Furthermore, the obtain module 10 is configured to obtain a historical video pushing category; and determine a current video to be pushed according to the historical video pushing category.

For other embodiments or specific implementations of the video pushing apparatus of the present application, reference may be made to the above method embodiments, which will not be described again here.

Besides, the present application further provides a storage medium. The video pushing program is stored on the storage medium, and when the video pushing is executed by a processor, steps of any one of the above-mentioned video pushing method are implemented.

Furthermore, it should be noted that, herein, the terms "include", "including" or any other variations thereof are intended to encompass non-exclusive inclusions, so that a process, method, article or system literally including a series of elements includes not only those elements, but also other elements not expressly listed or inherent to such a process, method, article or system. Without further limitation, an element qualified by the phrase "including a..." does not preclude the existence of additional identical elements in the process, method, article or system that includes the element.

The above serial numbers of the embodiments of the present application are only for description and do not represent the advantages or disadvantages of the embodiments.

From the description of the above embodiments, those skilled in the art can clearly understand that the methods of the above embodiments can be implemented not only by means of a software plus a necessary general hardware platform, but also by means of a hardware. However in many cases the former is better. Based on this understanding, the technical solutions of the present application in essence or the parts that make contributions to the prior art can be embodied in the form of software products. The computer software products is stored on a storage medium (such as a read-only memory/random access memory, a magnetic disk or an optical disk, etc.), and includes several instructions to make a terminal device (such as a mobile phone, a computer, a server, or a network device, etc.) execute the methods described in the various embodiments of the present application.

The above are only some embodiments of the present application, and do not limit the patent scope of the present application. Under the inventive concept of the present application, equivalent structural transformations made by using the contents of the description and drawings of the present application, or direct/indirect application in other related technical fields are included in the patent protection scope of the present application.

## Claims

1. A video pushing method, **characterized by** comprising:
obtaining audio-video information of a multimedia file played on a display interface;
performing scene recognition on the audio-video information through a preset scene recognition model to obtain a scene recognition result; and
determining a video pushing category according to the scene recognition result, and pushing a video according to the video pushing category.

2. The video pushing method according to claim 1, wherein the audio-video information comprises image information,
the obtaining the audio-video information of the multimedia file played on the display interface comprises:
intercepting the image information of the multimedia file played on the display interface at a preset interception frequency during a preset sampling period.

3. The video pushing method according to claim 1, wherein the audio-video information comprises audio information,
the obtaining the audio-video information of the multimedia file played on the display interface comprises:
recording the audio information of the multimedia file played on the display interface at a preset recording frequency and with a recording duration during a preset sampling period.

4. The video pushing method according to claim 1, wherein the scene recognition result comprises an image recognition result, the performing scene recognition on the audio-video information through the preset scene recognition model to obtain the scene recognition result comprises:
extracting an image feature in each intercepted image information through the preset scene recognition model, and performing scene recognition on the image feature extracted to obtain the image scene recognition result.

5. The video pushing method according to claim 1, wherein the scene recognition result comprises an audio recognition result, the performing scene recognition on the audio-video information through the preset scene recognition model to obtain the scene recognition result comprises:
extracting a voiceprint feature in the audio information through the preset scene recognition model, and performing scene recognition on the voiceprint feature extracted to obtain the audio scene recognition result.

6. The video pushing method according to claim 4, wherein after the extracting the image feature in each intercepted image information through the preset scene recognition model, and performing scene recognition on the image feature extracted to obtain the image scene recognition result, the method further comprises:
determining an image scene category corresponding to each image information according to the image scene recognition result;
counting a video category number according to the image scene category;
determining whether the video category number is less than a preset number;
in response to that the video category number is less than the preset number, adjusting the preset sampling period; and
intercepting the image information of the multimedia file played on the display interface at a preset interception frequency during an adjusted sampling period.

7. The video pushing method according to claim 1, wherein before the determining the video pushing category according to the scene recognition result, and pushing the video according to the video pushing category, the method further comprises:
obtaining a historical scene recognition result of the multimedia file;
determining whether the historical scene recognition result is consistent with the scene recognition result; and
in response to that the historical scene recognition result is consistent with the scene recognition result, counting the number of times that the historical scene recognition result is consistent with the scene recognition result, and in response to that the number of times reaches a preset times threshold, determining the video pushing category according to the scene recognition result, and pushing the video according to the video pushing category.

8. The video pushing method according to claim 1, wherein the determining the video pushing category according to the scene recognition result, and pushing the video according to the video pushing category comprises:
determining a video category of the multimedia file and a playback duration corresponding to the video category according to the scene recognition result;
determining a playback weight corresponding to the video category according to the playback duration; and
determining the video pushing category according to the playback weight, and pushing the video according to the video pushing category.

9. The video pushing method according to any one of claims 1 to 8, wherein before the obtaining the audio-video information of the multimedia file played on the display interface, the method further comprises:
obtaining a historical video pushing category; and
determining a current video to be pushed according to the historical video pushing category, and displaying the video to be pushed.

10. The video pushing method according to claim 1, wherein the preset scene recognition model is a scene recognition model trained in advance through a large amount of sample data, to recognize a current playback scene according to audio-video information input.

11. The video pushing method according to claim 4, wherein the image feature comprises texts, watermarks, logos or item information features in the image information.

12. The video pushing method according to claim 4, wherein the voiceprint feature is a voiceprint in recorded audio information.

13. The video pushing method according to claim 1, wherein a playback weight corresponding to a video category is determined based on a playback duration corresponding to the video category.

14. A video pushing device, **characterized by** comprising a memory, a processor and a video pushing program stored on the memory and executed on the processor, wherein when the video pushing program is executed by the processor, the video pushing method according to any one of claims 1 to 13 is implemented.

15. A storage medium, wherein a video pushing program is stored on the storage medium, and when the video pushing program is executed by a processor, the video pushing method according to any one of claims 1 to 13 is implemented.
